# EUROPÄISCHE PATENTSCHRIFT

(11) **EP 3 317 856 B1**
(45) Veröffentlichungstag und Bekanntmachung des Hinweises auf die Patenterteilung: **01.06.2022**
(21) Anmeldenummer: 16759985.1
(22) Anmeldetag: 01.08.2016
(51) Int. Cl.: G06T 7/00, G06K 9/03, G06F 11/22

(54) **VERFAHREN ZUM ÜBERPRÜFEN DER RICHTIGKEIT VON EINER DARSTELLUNG VON BILDDATEN AUF EINEM ANZEIGEMITTEL UND ANZEIGEEINRICHTUNG**
METHOD FOR CHECKING THE ACCURACY OF A REPRESENTATION OF IMAGE DATA ON A DISPLAY MEANS AND DISPLAY DEVICE
PROCÉDÉ POUR VÉRIFIER L'EXACTITUDE D'UNE REPRÉSENTATION DE DONNÉES D'IMAGE SUR UN MOYEN D'AFFICHAGE ET DISPOSITIF D'AFFICHAGE

(30) Priorität: 31.08.2015 DE 102015216574
(43) Veröffentlichungstag der Anmeldung: 09.05.2018
(73) Patentinhaber: Siemens Mobility GmbH, 81739 München (DE)
(72) Erfinder: VORWERK, Peter, 38100 Braunschweig (DE)
(86) Internationale Anmeldenummer: PCT/EP2016/068282
(87) Internationale Veröffentlichungsnummer: WO 2017/036699

(56) Entgegenhaltungen:
- WO-A1-2004/061739
- WO-A1-2004/061739
- WO-A1-2014/091505
- DE-A1-102007 048 608
- DE-A1-102007 048 608
- DE-A1-102010 023 891
- DE-A1-102010 023 891
- DE-A1-102013 215 756
- US-A- 5 351 201
- US-A- 5 351 201
- US-A1- 2002 190 972
- US-A1- 2007 110 339
- US-A1- 2007 110 339

## Beschreibung

Die Erfindung betrifft ein Verfahren zum Überprüfen der Richtigkeit von einer Darstellung von Bilddaten auf einem Anzeigemittel, bei dem aus einer Bildbeschreibung die Darstellung von Bilddaten erzeugt und angezeigt wird und die Richtigkeit der Darstellung der Bilddaten anhand der Bildbeschreibung überprüft wird.

Die Erfindung betrifft weiterhin eine Anzeigeeinrichtung mit einer Steuereinrichtung, die zum Erzeugen einer Darstellung von Bilddaten aus einer Bildbeschreibung ausgebildet ist und mit einem Anzeigemittel, das zum Anzeigen der Darstellung von Bilddaten ausgebildet ist.

Eine fehlerhafte Darstellung von Bilddaten auf einem Anzeigemittel, beispielsweise einem Bildschirm, einem Monitor oder einem Display, kann in Abhängigkeit von der Funktion des Anzeigemittels schwerwiegende Auswirkungen haben. Dies betrifft insbesondere solche Fälle, in denen Anzeigemittel in sicherheitsrelevanten bzw. sicherheitskritischen Bereichen eingesetzt werden. Als Beispiele hierfür seien Anwendungen im Bereich der Bahn-, Flugzeug-, Automobil-, Militär-, Medizin- oder Energietechnik, d.h. beispielsweise in Kernkraftwerken, genannt.

Generell kann Hardware beispielsweise aufgrund von Alterung, Verschleiß oder Fremdeinfluss ausfallen. Heutige Anzeigesysteme arbeiten in der Regel computergestützt, wobei der Zustand des jeweiligen Systems auf einem Anzeigemittel dargestellt wird. Da die Bedienhandlungen des Personals oftmals von den auf den Anzeigemitteln dargestellten Informationen abhängen, ist es erforderlich, dass Fehler in der Anzeige, d. h. ein fehlerhaft dargestellter Zustand des Systems, zeitnah und zuverlässig erkannt werden.

Eine Möglichkeit um dies zu erreichen, besteht in einem Überprüfen mit Hilfe von Prüfsummen.

Alternativ können die auf dem Anzeigemittel dargestellten Bilddaten mit Hilfe einer Prüfeinrichtung, beispielsweise einer Kamera, erfasst und durch Vergleich mit der Bildbeschreibung überprüft werden. Die Bildbeschreibung beinhaltet alle darzustellenden Informationen, inklusive beispielsweise einer Anlagenbildbeschreibung mit Projektierungsdaten. Die Bildbeschreibung kann statische und ggf. auch dynamische Daten, wie beispielsweise Bedienhandlungen und Prozessdaten, enthalten. Aus der Bildbeschreibung wird die Darstellung von Bilddaten erzeugt, die anschließend auf dem Anzeigemittel dargestellt wird. Eine solche Überprüfung der Darstellung von Bilddaten ist beispielsweise in der DE 10 2010 023 891 A1 beschrieben. Dabei wird die Bildbeschreibung zum einen an die Anzeigeeinrichtung zur Erzeugung der Darstellung der Bilddaten übermittelt und zum anderen an die Prüfeinrichtung zur Bildauswertung. Für eine erfolgreiche Überprüfung muss die Übermittlung der Bildbeschreibung zeitgleich an die Prüfeinrichtung sichergestellt werden. Dies ist mit gewissem technischem Aufwand verbunden.

Aus der US 5,351,201 ist ein Verfahren bekannt, mit dem die Perfomance eines Displays überprüft werden kann.

Der Erfindung liegt die Aufgabe zugrunde, ein Verfahren und eine Vorrichtung der eingangs genannten Art bereitzustellen, bei denen die Überprüfung der Darstellung von Bilddaten auf einem Anzeigemittel vereinfacht ist.

Das erfindungsgemäße Verfahren nach Anspruch 1 löst diese Aufgabe erfindungsgemäß dadurch, dass die Bildbeschreibung in die Darstellung der Bilddaten integriert und zum Überprüfen aus der Darstellung der Bilddaten ausgelesen wird.

Die erfindungsgemäße Anzeigeeinrichtung nach Anspruch 9 löst die Aufgabe dadurch, dass die Steuereinrichtung zum Integrieren der Bildbeschreibung in die Darstellung der Bilddaten ausgebildet ist.

Die erfindungsgemäße Lösung hat den Vorteil, dass die Bildbeschreibung über das Anzeigemittel übertragen wird und dadurch zeitgleich auf dem gleichen Übertragungsweg an eine Prüfeinrichtung übermittelt wird. Somit wird die Darstellung der Bilddaten mit der dazugehörigen Bildbeschreibung zusammengefasst. Weitere Maßnahmen zur Sicherstellung der Konsistenz der Darstellung von Bilddaten und der Bildbeschreibung sind dadurch nicht mehr notwendig und können entfallen. Die Bildbeschreibung enthält dynamische Daten. Eine zusätzliche Überprüfung mit Hilfe von Prüfsummen kann selbstverständlich auch erfolgen.

Die Erfindung kann durch vorteilhafte Ausgestaltungen weiterentwickelt werden, die im Folgenden beschrieben sind.

So kann in einer vorteilhaften Ausgestaltung des erfindungsgemäßen Verfahrens die Bildbeschreibung in der Darstellung der Bilddaten codiert angezeigt werden. Dies hat den Vorteil, dass die zusätzliche Hinterlegung der Bildbeschreibung in der Darstellung der Bilddaten für einen Bediener oder Benutzer nicht erkennbar, jedoch durch technische Hilfsmittel auswertbar ist. Ein Bediener wird somit von der Darstellung der Bildbeschreibung nicht abgelenkt, so dass er sich voll auf die übrigen, für ihn wichtigen und für ihn bestimmten Bildinformationen konzentrieren kann.

Ferner kann die Bildbeschreibung in einem vorbestimmten Anzeigebereich des Anzeigemittels dargestellt werden. Beispielsweise kann die Bildbeschreibung durch eine Modifikation eines Bildhintergrunds integriert werden. Dies hat den Vorteil, dass dieser Anzeigebereich vom Bediener üblicherweise unbeachtet ist und für die Anzeige von für den Bediener relevanten Informationen nicht genutzt wird. Dabei kann die Anordnung der Bildbeschreibung in freier Verteilung im Anzeigebereich erfolgen.

Um die Bildbeschreibung möglichst effektiv und trotzdem für einen Bediener unauffällig zu übermitteln, kann die Bildbeschreibung durch eine Modifikation von Pixeln in der Darstellung der Bilddaten integriert werden. Insbesondere kann die Bildbeschreibung durch eine vorbestimmte Farbabweichung von Pixeln in die Darstellung der Bilddaten integriert werden. Dies hat den Vorteil, dass eine größere Datenmenge durch die Darstellung der Bilddaten codiert übermittelt werden kann. Bei der Anwendung dieser Ausführungsform kann ein Bildschirmhintergrund beispielsweise in dunklem grau dargestellt sein und in jedes Pixel für jeden Farbanteil, also rot, grün und blau, eine Farbabweichung um +/- einen Farbwert codiert werden kann. Selbstverständlich kann auch bei einem komplett schwarzen bzw. weißen Hintergrund, also einem Hintergrund am Ende der Farbskala, eine Farbabweichung mit 0,1 oder 2 Farbwerten heller bzw. dunkler dargestellt werden, da hier eine Farbkorrektur nur in einer Richtung möglich ist.

Um die Codierung der Bildbeschreibung möglichst gut und zuverlässig erfassen zu können, kann die Bilddarstellung zeilenweise überprüft werden.

Weiterhin kann in einer vorteilhaften Ausgestaltung die Bildbeschreibung fehleroffenbarend oder fehlerkorrigierend codiert werden. Dies hat den Vorteil, dass eine mögliche Verfälschung der Bildbeschreibung erkannt und entsprechend behandelt werden kann. Einzelne Bitfehler können so erkannt werden.

Erfindungsgemäß werden bei der Erzeugung der Bildbeschreibung erfindungsgemäß dynamische Daten, wie beispielsweise Prozessdaten und/oder Bedienhandlungen, einer Eisenbahnanlage berücksichtigt.

In einer vorteilhaften Ausgestaltung der erfindungsgemäßen Anzeigeeinrichtung kann die Steuereinrichtung eine Codiereinrichtung aufweisen, die zum Integrieren der Bildbeschreibung durch Modifikation gemäß eines vorbestimmten Codes in die Darstellung der Bilddaten ausgebildet ist. Dies hat den bereits oben bei der Ausführungsform des erfindungsgemäßen Verfahrens beschriebenen Vorteil, dass die Bildbeschreibung für einen Bediener quasi unsichtbar in der Darstellung der Bilddaten integriert ist.

Ferner kann die Codiereinrichtung die Bildbeschreibung durch Modifikation von mehreren Pixeln codieren. Dies hat den ebenfalls bereits oben bei der Ausführungsform des erfindungsgemäßen Verfahrens beschriebenen Vorteil, dass eine große Datenmenge auf einfache Weise effektiv übermittelt werden kann.

Für eine besonders geeignete Anwendung der Erfindung kann die Anzeigeeinrichtung Teil einer technischen Anlage, insbesondere einer eisenbahntechnischen Anlage, sein.

Die Erfindung betrifft ferner eine Einrichtung zum Überprüfen der Richtigkeit von einer Darstellung von Bilddaten auf einem Anzeigemittel, mit einer Anzeigeeinrichtung, die wenigstens ein Anzeigemittel aufweist, und mit einer Prüfeinrichtung zum Überprüfen der Richtigkeit der von der Anzeigeeinrichtung angezeigten Darstellung der Bilddaten. Um die für die Überprüfung nötige Bildbeschreibung auf einfache Weise übermitteln zu können, ist die Anzeigeeinrichtung gemäß der vorliegenden Erfindung nach einer der zuvor beschriebenen Ausführungsformen ausgebildet.

Im Folgenden wird die Erfindung mit Bezug auf die beispielhafte Ausführungsform der Erfindung in den beigefügten Zeichnungen beschrieben.

Es zeigen:
- Figur 1: eine beispielhafte Darstellung eines Verfahrens aus dem Stand der Technik;
- Figur 2: eine schematische Darstellung der erfindungsgemäßen Einrichtung in einer beispielhaften Ausführungsform;
- Figur 3: eine schematische Darstellung der Anzeige einer erfindungsgemäßen Anzeigeeinrichtung in einer beispielhaften Ausführungsform;
- Figur 4: eine schematische Darstellung der erfindungsgemäßen Einrichtung in einer alternativen beispielhaften Ausführungsform.

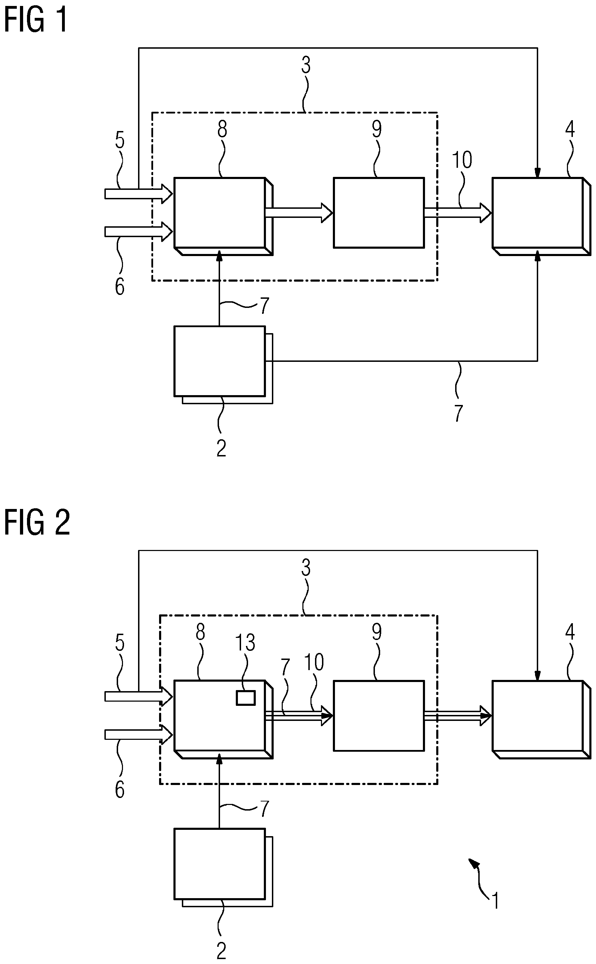

Zunächst wird die Erfindung mit Bezug auf die beispielhafte Ausführungsform in Figur 2 beschrieben.

Figur 2 zeigt eine eisenbahntechnische Anlage 1 mit einer Editoreinrichtung 2, einer Anzeigeeinrichtung 3 und einer Prüfeinrichtung 4.

Die Editoreinrichtung 2 empfängt in dieser beispielhaften Ausführungsform statische Daten der eisenbahntechnischen Anlage 1, beispielsweise in einem Stellwerk, und ermittelt hieraus eine Bildbeschreibung. Für die Ermittlung der Bildbeschreibung können selbstverständlich weitere Eingangsgrößen verwendet werden. Die Editoreinrichtung ist beispielsweise ein Projektierungswerkzeug oder Engineeringtool und erzeugt im Rahmen einer vorgelagerten Bildprojektierung die Bildbeschreibung, sowohl für die Anzeigeeinrichtung als auch z.B. in vereinfachter Form für die Prüfeinrichtung. Die ermittelte Bildbeschreibung 7 wird von der Editoreinrichtung 2 an die Anzeigeeinrichtung 3 übermittelt.

Die Anzeigeeinrichtung 3 umfasst in der in Figur 2 dargestellten beispielhaften Ausführungsform eine Steuereinrichtung 8 und ein Anzeigemittel 9. Die Steuereinrichtung 8, die beispielsweise ein Computer mit einer Grafikkarte sein kann, erzeugt aus der Bildbeschreibung 7 eine Darstellung von Bilddaten, die vom Anzeigemittel 9 darstellbar ist. Diese Bilddaten sind bei der eisenbahntechnische Anlage 1 statische Daten wie beispielsweise ein Gleis und die Position von Signalen entlang dieses Gleises. Weiterhin integriert die Steuereinrichtung 8 auch die Bildbeschreibung 7 selbst in die Darstellung der Bilddaten. Diese erzeugte Darstellung von Bilddaten wird von der Steuereinrichtung 8 an das Anzeigemittel 9 übertragen. Das Anzeigemittel 9 ist zum Beispiel ein Monitor oder ein Display. Folglich übermittelt die Steuereinrichtung 8 sowohl die Darstellung der Bilddaten 10 als auch die darin integrierte Bildbeschreibung 7 an das Anzeigemittel 9. Das Anzeigemittel 9 zeigt die Darstellung der Bilddaten 10 mit der darin integrierten Bildbeschreibung 7 an. Die visuell sichtbare Darstellung der Bilddaten 10 auf dem Anzeigemittel 9 ist von einer Bedienperson einsehbar. Die Anzeigeeinrichtung 3 empfängt in der Ausführungsform in Figur 2 auch dynamische Daten wie Prozessdaten 5 und Bedienhandlungen 6. Diese sind beispielsweise eine Weichenstellung oder die Schaltstellung eines Signals. Die Steuereinrichtung 8 erzeugt aus diesen Daten die Darstellung von dynamischen Bilddaten 10 auf dem Anzeigemittel 9; z.B. die farbige Ausleuchtung der Gleise, Weichen und Signale.

Die Darstellung der Bilddaten 10 auf dem Anzeigemittel 9 wird von der Prüfeinrichtung 4 auf die Richtigkeit der angezeigten Darstellung der Bilddaten überprüft. Die Prüfeinrichtung 4 umfasst beispielsweise eine Kamera (nicht dargestellt), die die Darstellung auf dem Anzeigemittel 9 erfasst und für eine Überprüfung in elektronischer Form bereitstellt. Eine solche Prüfeinrichtung 4 ist beispielsweise in der DE 10 2010 023 891 A1 beschrieben. Alternativ kann die Prüfeinrichtung 4 auch den Grafikkartenspeicher der Anzeigeeinrichtung 3 direkt auslesen oder entsprechende analoge Verfahren anwenden. Bei der Überprüfung der Richtigkeit der angezeigten Darstellung der Bilddaten werden diese mit der Bildbeschreibung 7 verglichen bzw. mit Hilfe der Bildbeschreibung interpretiert und ausgewertet. Die Prüfeinrichtung 4 könnte auch als Auswerteeinrichtung bezeichnet werden. Die Bildbeschreibung 7 wird von der Prüfeinrichtung 4 ermittelt. Dadurch ist keine separate Übermittlung der Bildbeschreibung 7 an die Prüfeinrichtung 4 nötig.

Dies ist ein Unterschied zu der in Figur 1 dargestellten Anlage aus dem Stand der Technik, bei dem die Bildbeschreibung 7 auf separaten Übertragungsweg an die Prüfeinrichtung 4 übermittelt wird.

Bei der in Figur 2 dargestellten beispielhaften Ausführungsform der Erfindung wird die Bildbeschreibung 7 von einer Codiereinrichtung 13 der Steuereinrichtung 8 durch eine Modifikation der Pixel des Bildschirmhintergrunds 11 codiert. So kann ein von der Prüfeinrichtung 4 beispielsweise verwendetes Computerprogramm beim Auslesen der Darstellung der Bilddaten 10 die Modifikation und Codierung erkennen. Jedoch erkennt ein vor dem Anzeigemittel 9 sitzender Bearbeiter die Codierung nicht und empfindet sie nicht als störend.

Die dynamischen Daten 5 werden separat, wie im Stand der Technik in Figur 1 an die Prüfeinrichtung 4 übermittelt.

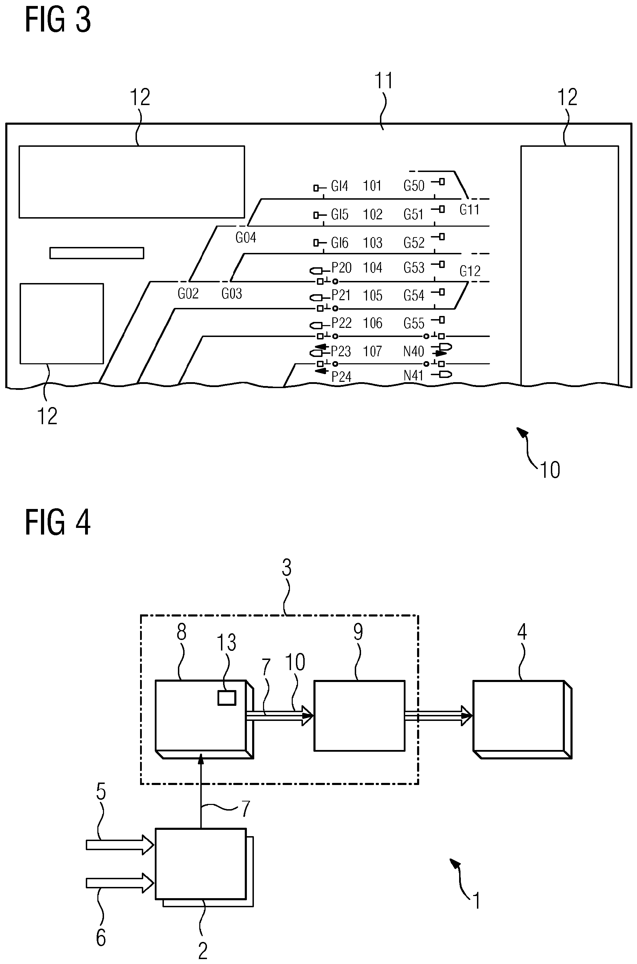

Bei der in Figur 3 dargestellten Darstellung von Bilddaten 10 auf dem Anzeigemittel 9 ist der Bildschirmhintergrund 11 nicht komplett schwarz, sondern in einem dunklen grau dargestellt. Bei dieser beispielhaften Ausführungsform wird die Bildbeschreibung 7 durch eine Farbabweichung um +/- einen Farbwert eines Pixels codiert. Die Codierung kann dabei für jeden Farbanteil, also rot, grün und blau, jedes Pixels erfolgen. Bei der in Figur 3 dargestellten beispielhaften Darstellung der Bilddaten 10 wird die Bildbeschreibung 7 in vorbestimmten Blöcken 12 des Bildschirmhintergrunds 11 codiert. Alternativ kann die Einbettung der Bildbeschreibung 7 auch frei verteilt in dem gesamten Bildschirmhintergrund 11 erfolgen. Dabei sind für die Auswertung der Bildbeschreibung 7 keine spezifischen Informationen über deren Position in der grafischen Bilddarstellung erforderlich. Vielmehr wird die gesamte Bilddarstellung zeilenweise abgetastet. Abweichungen von +/- einem Farbwert vom Bildschirmhintergrund 11 werden als Codierung im Sinne des erfindungsgemäßen Verfahrens interpretiert und in dieser Reihenfolge ausgelesen und ausgewertet. Die Einbettung der Bildbeschreibung 7 in die Darstellung der Bilddaten 10 wird zusätzlich durch fehleroffenbarende und/oder fehlerkorrigierende Codierungen abgesichert, so dass eine mögliche Verfälschung erkannt und entsprechend behandelt werden kann.

Im Folgenden wird die in Figur 4 dargestellte alternative Ausführungsform der erfindungsgemäßen eisenbahntechnischen Anlage 1 beschrieben. Der Einfachheit halber wird lediglich auf die Unterschiede zu der in Figur 2 dargestellten Ausführungsform eingegangen.

Bei der beispielhaften Ausführungsform in Figur 4 werden die dynamischen Daten 5, 6 zusammen mit statischen Daten an die Editoreinrichtung 2 gesendet. Die Editoreinrichtung 2 empfängt somit sowohl statische Daten als auch dynamische Daten der eisenbahntechnischen Anlage 1 und ermittelt daraus die Bildbeschreibung 7, die an die Anzeigeeinrichtung 3 übermittelt wird. Dadurch wird die Bildbeschreibung 7, die bei dieser Ausführungsform auch die dynamischen Daten 5, 6 umfasst, von der Steuereinrichtung 8 in die Darstellung der Bilddaten 10 integriert. Folglich müssen zur Überprüfung durch die Prüfeinrichtung 4 die dynamischen Daten 5, 6 bei der Ausführungsform in Figur 4 nicht separat an die Prüfeinrichtung 4 übermittelt werden.

## Patentansprüche

1. Verfahren zum Überprüfen der Richtigkeit von einer Darstellung von Bilddaten (10) auf einem in einem sicherheitsrelevanten oder sicherheitskritischen Bereich eingesetzten Anzeigemittel (9),
bei dem aus einer Bildbeschreibung (7) die Darstellung von Bilddaten (10) erzeugt und angezeigt wird und
die Richtigkeit der Darstellung der Bilddaten (10) anhand der Bildbeschreibung (7) überprüft wird, wobei
bei der Erzeugung der Bildbeschreibung (7) dynamische Daten einer Eisenbahnanlage (1) berücksichtigt werden,
**dadurch gekennzeichnet, dass** die Bildbeschreibung (7) in die Darstellung der Bilddaten (10) integriert und zum Überprüfen aus der Darstellung der Bilddaten (10) ausgelesen wird.

2. Verfahren nach Anspruch 1,
**dadurch gekennzeichnet, dass**
die Bildbeschreibung (7) in der Darstellung der Bilddaten (10) codiert angezeigt wird.

3. Verfahren nach Anspruch 1 oder 2,
**dadurch gekennzeichnet, dass**
die Bildbeschreibung (7) in einem vorbestimmten Anzeigebereich (12) dargestellt wird.

4. Verfahren nach einem der oben genannten Ansprüche,
**dadurch gekennzeichnet, dass**
die Bildbeschreibung (7) durch eine Modifikation eines Bildhintergrundes (11) integriert wird.

5. Verfahren nach einem der oben genannten Ansprüche,
**dadurch gekennzeichnet, dass**
die Bildbeschreibung (7) durch eine Modifikation von Pixeln in die Darstellung der Bilddaten (10) integriert wird.

6. Verfahren nach einem der oben genannten Ansprüche,
**dadurch gekennzeichnet, dass**
die Bildbeschreibung (7) durch eine vorbestimmte Farbabweichung von Pixeln in die Darstellung der Bilddaten integriert wird.

7. Verfahren nach einem der oben genannten Ansprüche,
**dadurch gekennzeichnet, dass**
die Darstellung der Bilddaten (10) zeilenweise überprüft wird.

8. Verfahren nach einem der oben genannten Ansprüche,
**dadurch gekennzeichnet, dass**
die Bildbeschreibung (7) fehleroffenbarend und/oder fehlerkorrigierend dargestellt wird,

9. Anzeigeeinrichtung (3) zum Einsatz in einem sicherheitsrelevanten oder sicherheitskritischen Bereich
mit einer Steuereinrichtung (8), die zum Erzeugen einer Darstellung von Bilddaten (10) aus einer Bildbeschreibung (7) ausgebildet ist, und
mit einem Anzeigemittel (9), das zum Anzeigen der Darstellung von Bilddaten (10) ausgebildet ist, wobei die Steuereinrichtung (8) bei der Erzeugung der Bildbeschreibung (7)dynamische Daten einer Eisenbahnanlage (1) berücksichtigt,
**dadurch gekennzeichnet, dass** die Bildbeschreibung (7) in die Darstellung der Bilddaten (1) integriert und zum Überprüfen aus der Darstellung der Bilddaten (10) von einer Prüfeinrichtung (4) auslesbar ist.

10. Anzeigeeinrichtung (3) nach Anspruch 9,
**dadurch gekennzeichnet, dass**
die Steuereinrichtung (8) eine Codiereinrichtung (13) aufweist, die zum Integrieren der Bildbeschreibung (7) durch Modifikation gemäß einem vorbestimmten Code in die Darstellung der Bilddaten (10) ausgebildet ist.

11. Anzeigeeinrichtung (3) nach Anspruch 10,
**dadurch gekennzeichnet, dass**
die Codiereinrichtung (13) die Bildbeschreibung (7) durch Modifikation von mehreren Pixeln codiert.

12. Anzeigeeinrichtung (3) nach einem der Ansprüche 9 bis 11,
**dadurch gekennzeichnet, dass**
die Anzeigeeinrichtung (3) Teil der eisenbahntechnischen Anlagen (1) ist.

13. Einrichtung zum Überprüfen der Richtigkeit von einer Darstellung von Bilddaten auf einem Anzeigemittel,
mit einer Anzeigeeinrichtung (3), die wenigstens ein Anzeigemittel (9) aufweist, und
mit einer Prüfeinrichtung (4) zum Überprüfen der Richtigkeit der von der Anzeigeeinrichtung (3) angezeigten Darstellung der Bilddaten (10),
**dadurch gekennzeichnet, dass** die Anzeigeeinrichtung (3) nach einem der Ansprüche 9 bis 12 ausgebildet ist.

## Claims

1. Method for checking the accuracy of a representation of image data (10) on a display means (9) used in a security-relevant or security-critical area,
in which the representation of image data (10) is generated and displayed from an image description (7) and
the accuracy of the representation of image data (10) is checked on the basis of the image description (7), wherein dynamic data of a railway system (1) is taken into account when the image description (7) is generated,
**characterised in that**
the image description (7) is integrated into the representation of the image data (10) and for checking purposes is read out from the representation of the image data (10) .

2. Method according to claim 1,
**characterised in that**
the image description (7) is displayed encoded in the representation of the image data (10).

3. Method according to claim 1 or 2,
**characterised in that**
the image description (7) is displayed in a predetermined display region (12).

4. Method according to one of the afore-cited claims,
**characterised in that**
the image description (7) is integrated by a modification of an image background (11).

5. Method according to one of the afore-cited claims,
**characterised in that**
the image description (7) is integrated into the representation of image data (10) by modification of pixels.

6. Method according to one of the afore-cited claims,
**characterised in that**
the image description (7) is integrated into the representation of image data by a predetermined colour variation of pixels.

7. Method according to one of the afore-cited claims,
**characterised in that**
the representation of the image data (10) is checked line by line.

8. Method according to one of the afore-cited claims,
**characterised in that**
the image description (7) is shown as revealing and/or correcting errors.

9. Display device (3) for use in a security-relevant or security-critical area
having a control device (8), which is embodied to generate a representation of image data (10) from an image description (7), and
having a display means (9), which is embodied to display the representation of image data (10), wherein when the image description (7) is generated, the control device (8) takes into account dynamic data of a railway system (1), **characterised in that**
the image description (7) is integrated into the representation of the image data (1) and for checking purposes can be read out from the representation of the image data (10) by a checking device (4).

10. Display device (3) according to claim 9,
**characterised in that**
the control device (8) has an encoding device (13), which is embodied to integrate the image description (7) into the representation of image data (10) by modification according to a predetermined code.

11. Display device (3) according to claim 10,
**characterised in that**
the encoding device (13) encodes the image description (7) by modification of a number of pixels.

12. Display device (3) according to one of claims 9 to 11,
**characterised in that** the display device (3) is part of the railway systems (1).

13. Device for checking the accuracy of a representation of image data on a display means,
having a display device (3), which has at least one display means (9), and
having a checking device (4) for checking the accuracy of the representation of image data (10) displayed by the display device (3),
**characterised in that** the display device (3) is embodied according to one of claims 9 to 12.

## Revendications

1. Procédé de contrôle de l'exactitude d'une représentation de données (10) d'image sur un moyen (9) d'affichage utilisé dans un domaine pertinent pour la sécurité ou critique pour la sécurité, dans lequel on produit et on affiche, à partir d'une description (7) d'image, la représentation de données (10) d'image et
on contrôle l'exactitude de la représentation des données (10) d'image au moyen de la description (7) d'image, dans lequel lors de la production de la description (7) d'image, on prend en compte des données dynamiques d'une installation (1) de voies ferrées,
**caractérisé en ce que** l'on intègre la description (7) d'image dans la représentation des données (10) d'image et on la lit pour le contrôle à partir de la représentation des données (10) d'image.

2. Procédé suivant la revendication 1,
**caractérisé en ce que**
l'on affiche, de manière codée, la description (7) d'image dans la représentation des données (10) d'image.

3. Procédé suivant la revendication 1 ou 2,
**caractérisé en ce que**
l'on représente la description (7) d'image dans une partie (12) d'affichage définie à l'avance.

4. Procédé suivant l'une des revendications précédentes,
**caractérisé en ce que**
l'on intègre à la description (7) d'image par une modification d'un arrière-plan (11) d'image.

5. Procédé suivant l'une des revendications précédentes,
**caractérisé en ce que**
l'on intègre la description (7) d'image par une modification de pixels dans la représentation des données (10) d'image.

6. Procédé suivant l'une des revendications précédentes,
**caractérisé en ce que**
l'on intègre la description (7) d'image par un affaiblissement défini à l'avance de la couleur de pixels dans la représentation des données d'image.

7. Procédé suivant l'une des revendications précédentes,
**caractérisé en ce que**
l'on contrôle ligne par ligne la représentation des données (10) d'image.

8. Procédé suivant l'une des revendications précédentes,
**caractérisé en ce que**
l'on représente la description (7) d'image avec mise en évidence d'erreur et/ou correction d'erreur.

9. Dispositif (3) d'affichage à utiliser dans un domaine pertinent pour la sécurité et/ou critique pour la sécurité comprenant un dispositif (8) de commande, qui est constitué pour produire une représentation de données (10) d'image à partir d'une description (7) d'image, et
comprenant un moyen (9) d'affichage, qui est constitué pour afficher la représentation de données (10) d'image, dans lequel le dispositif (8) de commande prend en compte, lors de la production de la description (7) d'image, des données dynamiques d'une installation (1) de voies ferrées,
**caractérisé en ce que**
la description (7) d'image est intégrée à la représentation des données (1) d'image et peut être lue par un dispositif (4) de contrôle, pour le contrôle à partir de la représentation des données (10) d'image.

10. Dispositif (3) d'affichage suivant la revendication 9,
**caractérisé en ce que**
le dispositif (8) de commande a un dispositif (13) de codage, qui est constitué pour intégrer la description (7) d'image, par modification suivant un code défini, à l'avance à la représentation des données (10) d'image.

11. Dispositif (3) d'affichage suivant la revendication 10,
**caractérisé en ce que**
le dispositif (13) de codage code la description (7) d'image par modification de plusieurs pixels.

12. Dispositif (3) d'affichage suivant l'une des revendications 9 à 11,
**caractérisé en ce que**
le dispositif (3) d'affichage fait partie d'une installation (1) de de la technique de chemins de fers.

13. Dispositif de contrôle de l'exactitude d'une représentation de données d'image sur un moyen d'affichage,
comprenant un dispositif (3) d'affichage, qui a au moins un moyen (9) d'affichage, et
comprenant un dispositif (4) de contrôle pour le contrôle de l'exactitude de la représentation, affichée par le dispositif (3) d'affichage, des données (10) d'image,
**caractérisé en ce que** le dispositif (3) d'affichage est constitué suivant l'une des revendications 9 à 12.
